# EUROPEAN PATENT APPLICATION

(11) **EP 2 587 110 A2**
(43) Date of publication of application: **01.05.2013**
(21) Application number: 12189499.2
(22) Date of filing: 23.10.2012
(51) Int. Cl.: F16M 11/22, F16M 11/04

(54) **Display apparatus**

(30) Priority: 27.10.2011 JP 2011235588; 07.09.2012 JP 2012197712
(71) Applicant: Funai Electric Co., Ltd., Daito-shi, Osaka 574-0013 (JP)
(72) Inventor: Kita, Yuki, Daito-shi, Osaka 574-0013 (JP); Fujikawa, Akihiro, Daito-shi, Osaka 574-0013 (JP)
(74) Representative: Grünecker, Kinkeldey, Stockmair & Schwanhäusser

(57) **Abstract**

This display includes a display body (2), a stand member (6), and a fastening member (66) fixing the display body and the stand member to each other, while either the stand member or the display body has a projecting portion (63) tapered in the vertical direction with respect to a contact surface where the stand member and the display body come into contact with each other, either the display body or the stand member has a recess portion (72) formed in a shape corresponding to a shape of the projecting portion and engaging with the projecting portion, and a side surface portion of the projecting portion is gradually guided along an inner side surface of the recess portion so that the projecting portion and the recess portion engage with each other when the display body and the stand member are fixed to each other.

## Description

### BACKGROUND OF THE INVENTION

### Field of the Invention

The present invention relates to a display, and more particularly, it relates to a display including a stand member.

### Description of the Background Art

A display including a stand member is known in general. Such a display is disclosed in Japanese Patent Laying-Open No. 2010-141610, for example.

The aforementioned Japanese Patent Laying-Open No. 2010-141610 discloses a thin display (display) that includes a body (display body) including a display panel (display portion) and a stand (stand member) supporting the body, is provided with an opening in a bottom portion of the body, and is provided with a latch portion latched to the opening of the body in the stand. In this thin display, the stand is mounted to the body with a screw while being temporarily fixed by latching the latch portion of the stand to the opening of the body.

In the thin display (display) according to the aforementioned Japanese Patent Laying-Open No. 2010-141610, however, the stand (stand member) is mounted to the body with the screw while being simply temporarily fixed to the body, and hence the stand and the body cannot be accurately positioned due to backlash between the latch portion of the stand and the opening of the body (display body). Therefore, the stand may be disadvantageously mounted to the body in a state inclined in a rotation direction with respect to the body in plan view when the thin display is set on a setting surface.

### SUMMARY OF THE INVENTION

The present invention has been proposed in order to solve the aforementioned problem, and an object of the present invention is to provide a display capable of inhibiting a stand member from being mounted to a display body in a state inclined in a rotation direction with respect to the display body in plan view.

A display according to an aspect of the present invention includes a display body including a display portion, a stand member supporting the display body, and a fastening member fixing the display body and the stand member to each other, while either the stand member or the display body has a projecting portion tapered in the vertical direction with respect to a contact surface where the stand member and the display body come into contact with each other, either the display body or the stand member has a recess portion formed in a tapered shape corresponding to the shape of the projecting portion and engaging with the projecting portion, and a side surface portion of the projecting portion is gradually guided along an inner side surface of the recess portion so that the projecting portion and the recess portion engage with each other when the display body and the stand member are fixed to each other with the fastening member.

In the display according to the aspect of the present invention, as hereinabove described, the projecting portion tapered in the vertical direction with respect to the contact surface where the stand member and the display body come into contact with each other is provided on either the stand member or the display body, the recess portion formed in the tapered shape corresponding to the shape of the projecting portion and engaging with the projecting portion is provided on either the display body or the stand member, and the side surface portion of the projecting portion is gradually guided along the inner side surface of the recess portion so that the projecting portion and the recess portion engage with each other when the display body and the stand member are fixed to each other with the fastening member. Thus, the tip of the tapered projecting portion moves toward the tip of the tapered recess portion along the inner side surface of the tapered recess portion when the stand member is mounted to the display body, and hence the projecting portion and the recess portion can be accurately positioned. Thus, the stand member and the display body can be accurately positioned, and hence the stand member can be inhibited from being mounted to the display body in a state inclined in a rotation direction with respect to the display body in plan view when the display mounted with the stand member is set on a setting surface. As a result, the user may not finely adjust the stand member not to incline the stand member when mounting the stand member, and hence workability for mounting the stand member can be improved. Furthermore, the tip of the tapered projecting portion moves toward the tip of the tapered recess portion while being guided by the inner side surface of the tapered recess portion when the stand member is mounted to the display body, and hence the stand member and the display body can be easily accurately positioned to be mounted to each other. As a result, also according to this, workability for mounting the stand member can be improved. In addition, the side surface portion of the projecting portion is gradually guided along the inner side surface of the recess portion when the stand member is fixed to the display body with the fastening member, whereby the projecting portion and the recess portion are accurately positioned when the stand member is fixed to the display body with the fastening member, and hence the stand member and the display body can be accurately positioned simply by first fitting the projecting portion into the recess portion roughly.

In the aforementioned display according to the aspect, the projecting portion preferably includes a rib integrally provided on either the stand member or the display body and extending in a direction along the contact surface, and the recess portion preferably includes a groove portion in a shape corresponding to the shape of the rib, integrally provided on either the display body or the stand member. According to this structure, the projecting portion and the recess portion may not be provided separately from the stand member and the display body because of the rib and the groove portion provided integrally on the stand member and the display body, respectively, and hence increase in the number of components can be prevented. Furthermore, the rib extending in the direction along the contact surface is provided, and the groove portion in the shape corresponding to the shape of the rib is provided, whereby the rib and the groove portion can engage with each other in a larger region extending in the direction along the contact surface. Thus, the stand member becomes harder to incline with respect to the display body in a state where the rib and the groove portion engage with each other, and consequently the stand member can be further inhibited from being mounted to the display body in a state inclined with respect to the display body.

In the aforementioned display according to the aspect, the projecting portion preferably includes a first projecting portion and a second projecting portion arranged at an interval, and the recess portion preferably includes a first recess portion engaging with the first projecting portion and a second recess portion engaging with the second projecting portion. According to this structure, a plurality of sets of the projecting portions and the recess portions can suppress the inclination of the stand member, and hence the stand member can be effectively inhibited from being mounted to the display body in the state inclined with respect to the display body.

In this case, the first projecting portion and the second projecting portion are preferably provided outside a position where the fastening member is attached so as to hold the fastening member therebetween, and the first recess portion engaging with the first projecting portion and the second recess portion engaging with the second projecting portion are preferably provided outside a position where the fastening member is attached so as to hold the fastening member therebetween. According to this structure, a distance between the first projecting portion and the second projecting portion can be increased, and hence the inclination (angle) of the stand member with respect to the display body can be reduced even if the stand member deviates by the same length in the rotation direction with respect to the display body in plan view, as compared with a case where the distance between the first projecting portion and the second projecting portion is small. Thus, the stand member can be more effectively inhibited from being mounted to the display body in the state inclined with respect to the display body.

In the aforementioned display according to the aspect, the projecting portion preferably has a triangular cross-sectional shape, and the recess portion preferably has a shape corresponding to the triangular cross-sectional shape of the projecting portion. According to this structure, the tip of the projecting portion in the triangular cross-sectional shape is easily positioned along the inner side surface of the recess portion in the triangular cross-sectional shape, and hence the stand member can be easily positioned with respect to the display body.

In the aforementioned display according to the aspect, the projecting portion preferably has a conical shape, and the recess portion preferably has a cross-sectional shape corresponding to a cross-sectional shape of the projecting portion having the conical shape. According to this structure, the side surface portion of the projecting portion having the conical shape is smoothly guided by the inner periphery of the recess portion, and hence the stand member can be more easily positioned with respect to the display body.

In the aforementioned display according to the aspect, the projecting portion preferably has a trapezoidal cross-sectional shape, and the recess portion preferably has a cross-sectional shape corresponding to the trapezoidal cross-sectional shape of the projecting portion. According to this structure, the tip of the projecting portion can be easily positioned along the inner side surface of the recess portion so that the stand member can be easily positioned with respect to the display body while a tapered tip portion of the projecting portion is inhibited from being broken, as compared with a case where the projecting portion is in a triangular cross-sectional shape.

In the aforementioned display according to the aspect, a tapered tip portion of the projecting portion is preferably rounded. According to this structure, the possibility that the tip portion of the projecting portion may be broken can be reduced as compared with a case where the tip portion is pointed, and hence the projecting portion and the recess portion can be inhibited from becoming incapable of being accurately positioned due to the breakage of the tip portion of the projecting portion.

In the aforementioned display according to the aspect, the display body preferably includes a first temporary fixing portion, the stand member preferably includes a second temporary fixing portion engaging with the first temporary fixing portion of the display body to temporarily fix the stand member to the display body, and the projecting portion is preferably configured to engage with the recess portion when the stand member is temporarily fixed to the display body by engaging the first temporary fixing portion and the second temporary fixing portion with each other. According to this structure, the projecting portion and the recess portion can be easily relatively positioned when the stand member is temporarily fixed to the display body with the first temporary fixing portion and the second temporary fixing portion, and hence the projecting portion and the recess portion can easily engage with each other. Furthermore, the projecting portion and the recess portion inhibit the stand member from being inclined with respect to the display body also when the first temporary fixing portion and the second temporary fixing portion to temporarily fix the stand member to the display body are provided, and hence the first temporary fixing portion and the second temporary fixing portion can be inhibited from being broken by twisting due to the inclination of the stand member with respect to the display body.

In this case, either the first temporary fixing portion or the second temporary fixing portion is preferably formed in a hook shape, and either the second temporary fixing portion or the first temporary fixing portion is preferably formed in a hole shape corresponding to the hook shape. According to this structure, the stand member can be easily temporarily fixed to the display body with the temporary fixing portions in the hook shape and the hole shape, and hence the projecting portion and the recess portion can be more easily relatively positioned.

In this case, the projecting portion preferably has a linearly extending shape, the recess portion is preferably so linearly formed as to correspond to the projecting portion extending linearly, and the projecting portion is preferably configured to be relatively slidable in a state of engaging with the recess portion when the stand member is temporarily fixed to the display body by engaging the first temporary fixing portion and the second temporary fixing portion with each other while relatively sliding the first temporary fixing portion and the second temporary fixing portion. According to this structure, the first temporary fixing portion and the second temporary fixing portion can be relatively moved while being guided by the projecting portion and the recess portion, and hence the first temporary fixing portion and the second temporary fixing portion can easily engage with each other to temporarily fix the stand member to the display body.

In the aforementioned structure in which the projecting portion has the linearly extending shape, the projecting portion is preferably so formed that the height thereof is tapered along a sliding direction and the width thereof is tapered along the sliding direction. According to this structure, the projecting portion can be inhibited from difficulty in relative sliding movement with respect to the recess portion due to variation of the dimension of the projecting portion, as compared with a case where the height and width of the projecting portion are not tapered along the sliding direction.

In the aforementioned structure in which the projecting portion has the linearly extending shape, the projecting portion and the recess portion preferably have prescribed intervals therebetween in a sliding direction in states before and after the projecting portion relatively slides while engaging with the recess portion. According to this structure, the prescribed intervals between the projecting portion and the recess portion can absorb variation of the dimension of the projecting portion even if the dimension of the projecting portion varies from each other.

In the aforementioned structure including the first temporary fixing portion, the projecting portion preferably includes a first projecting portion and a second projecting portion each extending in a direction along the contact surface and arranged at a prescribed interval, the recess portion preferably includes a first recess portion formed to extend in the direction along the contact surface so as to correspond to the projecting portion and engaging with the first projecting portion and a second recess portion formed to extend in the direction along the contact surface so as to correspond to the projecting portion and engaging with the second projecting portion, and the first recess portion and the second recess portion are preferably formed to have lengths different from each other. According to this structure, the orientation of the display body or the stand member can be easily distinguished, employing the first and second recess portions having the lengths different from each other as indicators, and hence the user can handily perform an operation of fixing the stand member to the display body.

In the aforementioned display according to the aspect, the stand member preferably has a planarized first mounting surface, the display body preferably has a planarized second mounting surface, the projecting portion is preferably provided on either the first mounting surface of the stand member or the second mounting surface of the display body, the recess portion is preferably provided on either the second mounting surface of the display body or the first mounting surface of the stand member, and the stand member and the display body are preferably so fixed to each other with the fastening member that the side surface portion of the projecting portion and the inner side surface of the recess portion come into close contact with each other and the first mounting surface and the second mounting surface come into surface contact with each other. According to this structure, the first mounting surface and the second mounting surface come into surface contact with each other so that the stand member can stably support the display body while the projecting portion and the recess portion suppress the inclination of the stand member.

According to the present invention, as hereinabove described, the stand member can be inhibited from being mounted to the display body in the state inclined in the rotation direction with respect to the display body in plan view.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an overall perspective view of a television set according to an embodiment of the present invention, as viewed from the front side;
Fig. 2 is an overall perspective view of the television set according to the embodiment of the present invention, as viewed from the rear side;
Fig. 3 is an exploded perspective view showing the overall structure of the television set according to the embodiment of the present invention;
Fig. 4 is a perspective view of a stand member according to the embodiment of the present invention;
Fig. 5 is a diagram showing a mounting surface of the stand member according to the embodiment of the present invention;
Fig. 6 is a diagram showing the bottom surface side of the stand member according to the embodiment of the present invention;
Fig. 7 is a perspective view of a display body according to the embodiment of the present invention, as viewed from below;
Fig. 8 is an enlarged view of a mounting surface of the television set according to the embodiment of the present invention;
Fig. 9 is a perspective view showing a state at a time when the stand member according to the embodiment of the present invention is mounted to the display body;
Fig. 10 is an enlarged sectional view of a rib and a groove portion of the television set according to the embodiment of the present invention before mounting;
Fig. 11 is an enlarged sectional view of the rib and the groove portion of the television set according to the embodiment of the present invention in a state temporarily fixed;
Fig. 12 is an enlarged sectional view of the rib and the groove portion of the television set according to the embodiment of the present invention after fastening with screws;
Fig. 13 illustrates a state before the stand member according to the embodiment of the present invention slides relatively with respect to the display body;
Fig. 14 illustrates a state after the stand member according to the embodiment of the present invention slides relatively with respect to the display body;
Fig. 15 is an enlarged sectional view showing a state where the stand member and the display body according to the embodiment of the present invention are mounted to each other with the screws;
Fig. 16 is a diagram showing a projecting portion of a stand member according to a first modification of the embodiment of the present invention;
Fig. 17 is a diagram showing a projecting portion of a stand member according to a second modification of the embodiment of the present invention; and
Fig. 18 is a diagram showing a projecting portion of a stand member according to a third modification of the embodiment of the present invention.

### DESCRIPTION OF THE PREFERRED EMBODIMENTS

An embodiment of the present invention is now described with reference to the drawings.

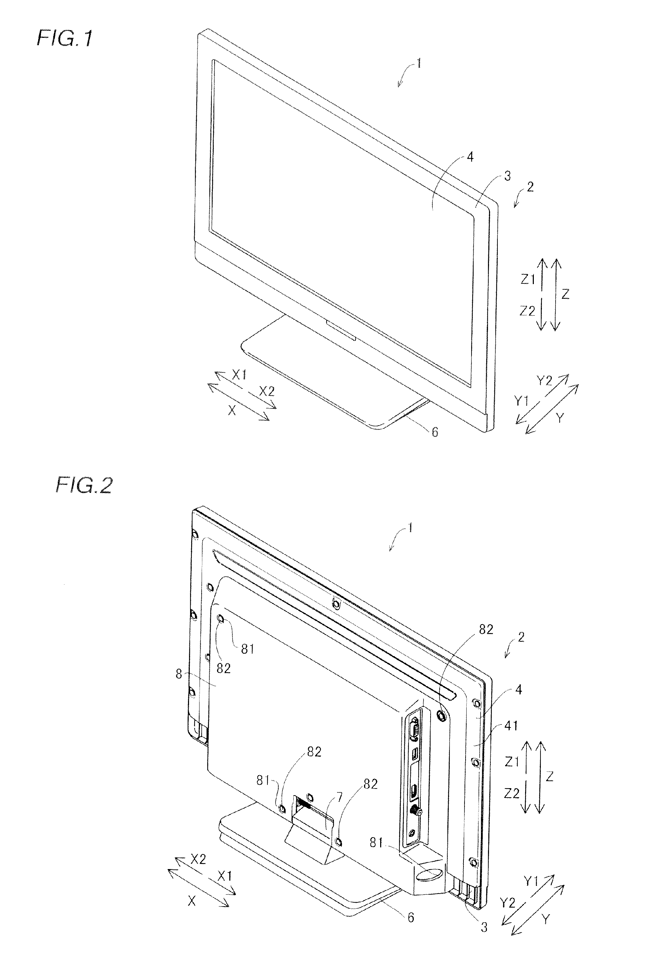

First, the structure of a television set 1 according to the embodiment of the present invention is described with reference to Figs. 1 to 15. The television set 1 is an example of the "display" in the present invention.

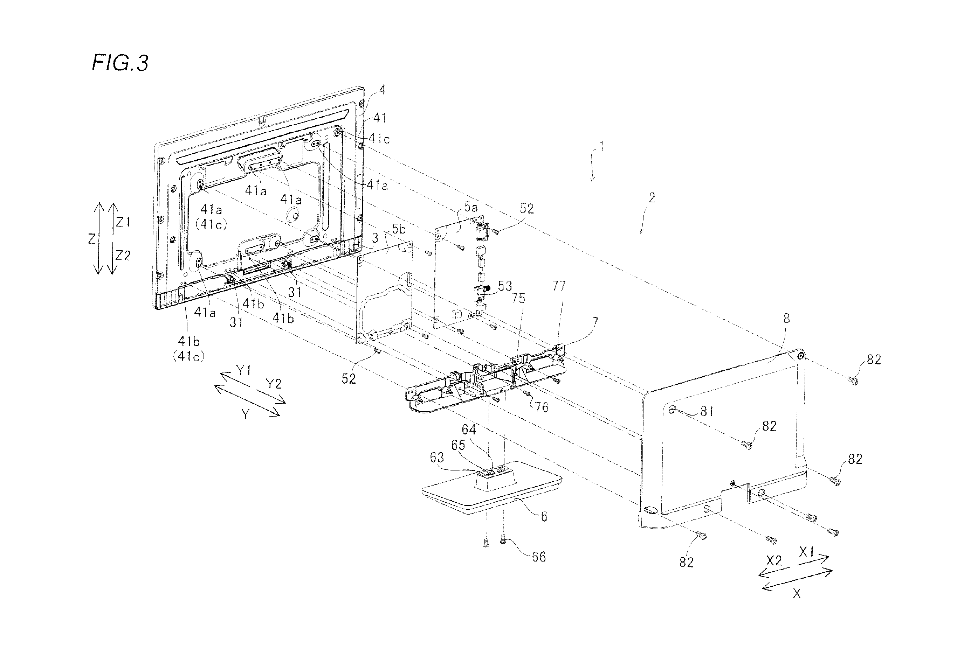

The television set 1 according to the embodiment of the present invention includes a display body 2, as shown in Figs. 1 and 2. The display body 2 includes a front cabinet 3, a display portion 4, circuit boards 5a and 5b, a stand mounting member 7 mounted with a stand member 6, and a cover member 8, as shown in Fig. 3. The stand member 6 supports the display body 2 from below, as shown in Figs. 1 and 2.

The front cabinet 3 has a substantially rectangular shape in the form of a frame, as shown in Fig. 1. The front cabinet 3 is made of resin such as polystyrene. Screw holes 31 to mount the stand mounting member 7 and the cover member 8 are provided in the rear surface of the front cabinet 3, as shown in Fig. 3.

The display portion 4 is arranged on the rear side (arrow Y2 direction side) of the front cabinet 3 and fixed to the front cabinet 3, as shown in Fig. 3. The display portion 4 is configured to display a television broadcasting picture on a screen thereof on the front side (arrow Y1 direction side). The display portion 4 has a rear frame 41 on a surface thereof on the rear side (arrow Y2 direction side). The rear frame 41 is made of metal (sheet metal made of SECC (electrogalvanized steel sheet), for example). The rear frame 41 is provided with screw holes 41a to mount the circuit board 5a for signal processing and the circuit board 5b for power source generation, screw holes 41b to mount the stand mounting member 7, and screw holes 41c to mount the cover member 8.

The circuit boards 5a and 5b are arranged on the rear side (arrow Y2 direction side) of the display portion 4, as shown in Fig. 3. The circuit boards 5a and 5b are connected to the display portion 4 by unshown wires. Furthermore, the circuit boards 5a and 5b are connected to each other by unshown wires. The circuit board 5a includes a receiving portion (tuner) 53 (see Fig. 3) capable of receiving television broadcasting.

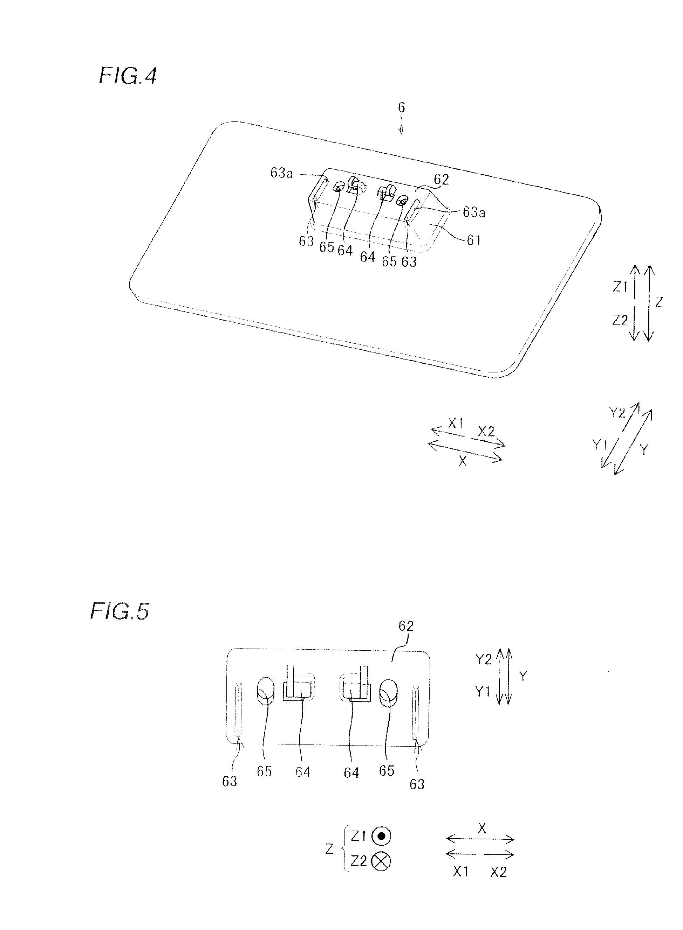

According to this embodiment, the stand member 6 mounted to the stand mounting member 7 of the display body 2 is provided on a lower portion of the display body 2, as shown in Fig. 3. As shown in Figs. 4 to 6, a stage-shaped mounting portion 61 protruding to a side (arrow Z1 direction side) opposed to the display body 2 is provided on the stand member 6. Furthermore, a planarized mounting surface 62 is provided on an upper portion of the mounting portion 61. In addition, ribs 63 engaging with groove portions 72 of the stand mounting member 7, hooks 64 engaging with holes 73 of the stand mounting member 7 to temporarily fix the stand member 6 to the display body 2, and screw holes 65 receiving screws 66 (see Fig. 3) are provided in the mounting surface 62. The mounting surface 62 is an example of the "first mounting surface" in the present invention. The ribs 63 are examples of the "projecting portion", the "first projecting portion", or the "second projecting portion" in the present invention. The hooks 64 are examples of the "second temporary fixing portion" in the present invention. The screws 66 are examples of the "fastening member" in the present invention.

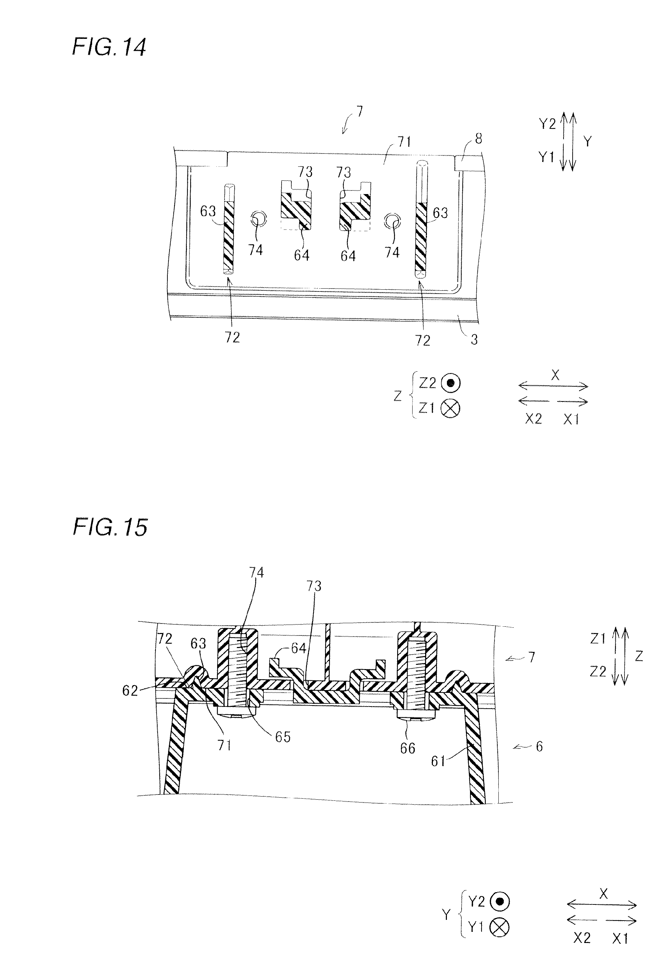

As shown in Figs. 4 to 6, the two ribs 63 are provided on the mounting surface 62 of the stand member 6. The ribs 63 are formed to extend in a direction along a contact surface (mounting surface 62) where the stand member 6 and the display body 2 come into contact with each other, as shown in Fig. 15. More specifically, the ribs 63 are so formed that the upper surfaces thereof extend parallel to the contact surface (mounting surface 62). The ribs 63 are arranged at a prescribed interval from each other in the horizontal direction (direction X) . The ribs 63 are provided in the vicinity of edge portions of the mounting surface 62 in the horizontal direction (direction X). The ribs 63 are provided on the outsides in the horizontal direction (direction X) of positions (screw holes 65) where the screws 66 are attached so as to hold the screws 66 therebetween, as shown in Fig. 15. The two ribs 63 are formed to extend linearly in the anteroposterior direction (direction Y). The ribs 63 are arranged parallel to each other. The ribs 63 are integrally formed by resin molding on the stand member 6. The ribs 63 are provided on the outsides in the horizontal direction (direction X) of the hooks 64.

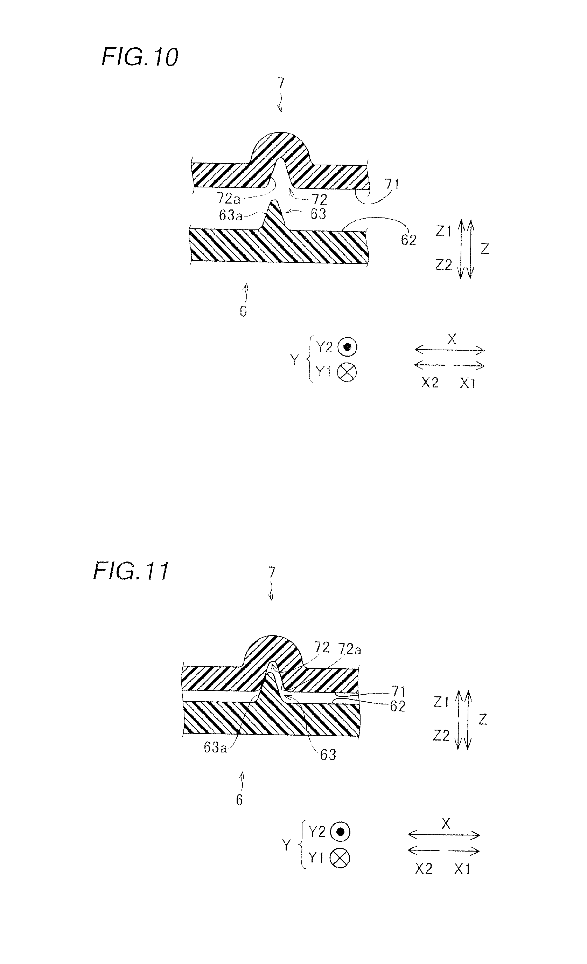

The ribs 63 have shapes tapered in the vertical direction (direction Z) with respect to the contact surface (mounting surface 62) where the stand member 6 and the display body 2 come into contact with each other, as shown in Figs. 10 to 12. More specifically, the ribs 63 each have a substantially triangular cross-sectional shape. In other words, although the ribs 63 each have the triangular cross-sectional shape as a whole, the tip portions of the ribs 63 are rounded so that the ribs 63 are hardly broken as compared with a case where the tip portions are pointed. The ribs 63 each are formed to extend from one edge portion (in an arrow Y1 direction) of the mounting surface 62 to a substantially central portion of the mounting surface 62 in the anteroposterior direction (direction Y), as shown in Figs. 4 and 5.

The two hooks 64 are provided at a prescribed interval on the mounting surface 62 of the stand member 6, as shown in Figs. 4 to 6. The two hooks 64 are provided on a substantially central portion in the horizontal direction (direction X) of the mounting surface 62 of the stand member 6. The hooks 64 have shapes corresponding to the shapes of the holes 73 of the stand mounting member 7. The hooks 64 are formed to protrude upward (arrow Z1 direction side) from the mounting surface 62. The hooks 64 are configured to engage with the holes 73 of the stand mounting member 7, as shown in Figs. 14 and 15.

The two screw holes 65 are provided at a prescribed interval in the mounting surface 62 of the stand member 6, as shown in Figs. 4 to 6. The screw holes 65 are provided between the hooks 64 and the ribs 63 in the horizontal direction (direction X), respectively. The stand member 6 is mounted to the stand mounting member 7 with the screws 66 through the screw holes 65, as shown in Fig. 15.

The stand mounting member 7 is arranged on the rear side (arrow Y2 direction side) of the display portion 4 and fixed to the rear frame 41 of the display portion 4, as shown in Fig. 3. The stand mounting member 7 is integrally formed by resin molding. The stand mounting member 7 is in the form of a standing wall covering the lower sides (arrow Z2 direction sides) of the circuit boards 5a and 5b mounted to the display portion 4. Screws 76 are inserted into the screw holes 41b of the rear frame 41 through screw receiving holes 75, whereby the stand mounting member 7 is mounted to the rear frame 41. Furthermore, screws 82 are inserted into the screw holes 41b of the rear frame 41 and screw holes 31 of the front cabinet 3 through screw receiving holes 77, whereby the stand mounting member 7 is mounted to the rear frame 41 and the front cabinet 3.

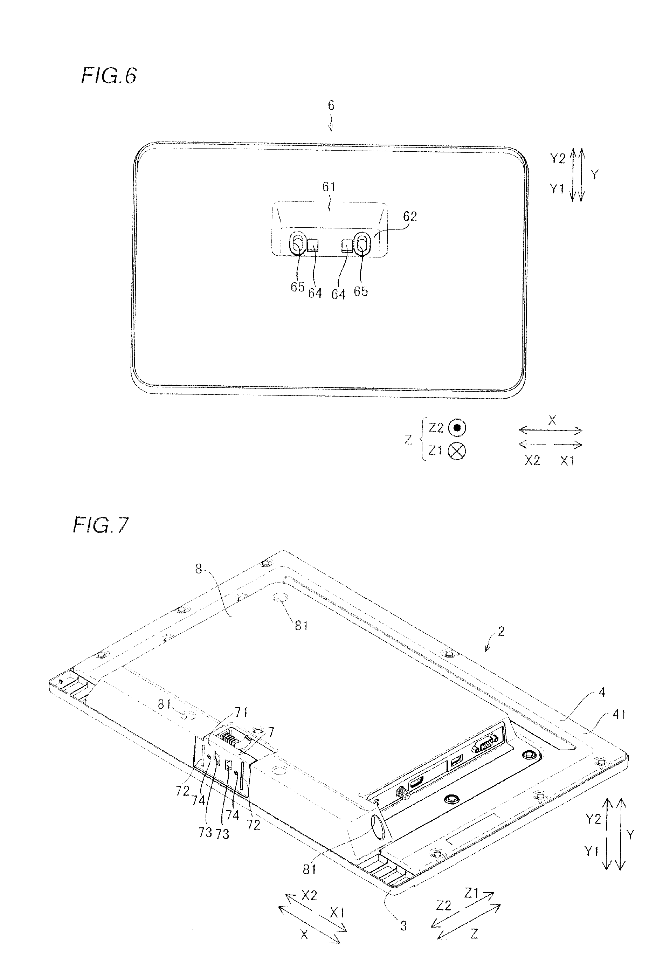

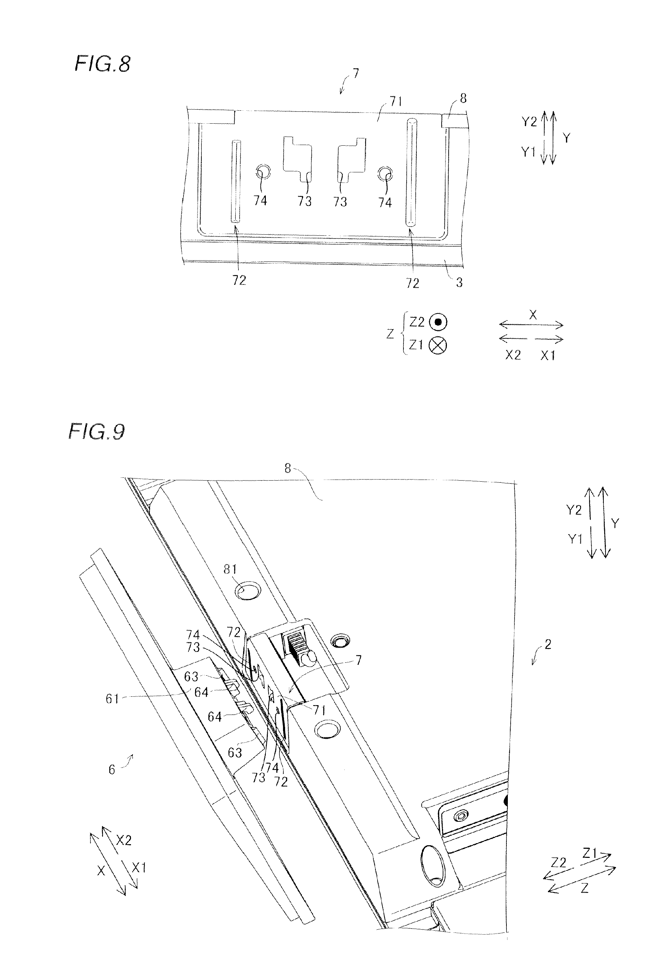

According to this embodiment, the stand mounting member 7 has a planarized mounting surface 71 on the lower surface side (arrow Z2 direction side), as shown in Figs. 7 and 8. The groove portions 72 into which the ribs 63 of the stand member 6 are inserted, the holes 73 engaging with the hooks 64 to temporarily fix the stand member 6, and screw holes 74 receiving the screws 66 are provided in the mounting surface 71 of the stand mounting member 7. The stand mounting member 7 is so configured that the mounting surface 71 thereof comes into surface contact with the mounting surface 62 of the stand member 6. The mounting surface 71 is an example of the "second mounting surface" in the present invention. The groove portions 72 are examples of the "recess portion", the "first recess portion", or the "second recess portion" in the present invention. The holes 73 are examples of the "first temporary fixing portion" in the present invention.

The two groove portions 72 are provided on the mounting surface 71 of the stand mounting member 7, as shown in Fig. 8. The groove portions 72 are formed to extend in a direction along a contact surface (mounting surface 71) where the stand member 6 and the display body 2 come into contact with each other, as shown in Fig. 15. More specifically, the groove portions 72 are so formed that the bottom surface thereof extends parallel to the contact surface (mounting surface 71). The two groove portions 72 are provided at a prescribed interval in the horizontal direction (direction X) on the mounting surface 71 of the stand mounting member 7. The two groove portions 72 are provided on the outsides in the horizontal direction (direction X) of positions (screw holes 74) where the screws 66 are attached so as to hold the screws 66 therebetween, as shown in Fig. 15. The two groove portions 72 are provided on the outsides (X-direction sides) of the two holes 73. The groove portions 72 are formed to extend linearly y in the anteroposterior direction (direction Y) so as to correspond to the linearly extending ribs 63. The two groove portions 72 are configured to engage with the two ribs 63, respectively. The groove portions 72 are arranged parallel to each other. The groove portions 72 are integrally formed by resin molding on the mounting surface 71 of the display body 2. A groove portion 72 on an arrow X1 direction side and a groove portion 72 on an arrow X2 direction side are formed to have lengths different from each other. More specifically, the groove portion 72 on the arrow X1 direction side is formed to be longer than the groove portion 72 on the arrow X2 direction side.

The groove portions 72 have shapes tapered in the vertical direction (direction Z) with respect to the contact surface (mounting surface 71) where the stand member 6 and the display body 2 come into contact with each other and corresponding to the shapes of the ribs 63, as shown in Figs. 10 to 12. More specifically, the groove portions 72 each have a substantially triangular cross-sectional shape. In other words, although the groove portions 72 each have the triangular cross-sectional shape as a whole, the tip portions of the groove portions 72 are rounded so that the groove portions 72 are hardly broken as compared with a case where the tip portions are pointed. When the stand member 6 is fixed to the display body 2 with the screws 66, side surface portions 63a of the ribs 63 are gradually guided along inner side surfaces 72a of the groove portions 72.

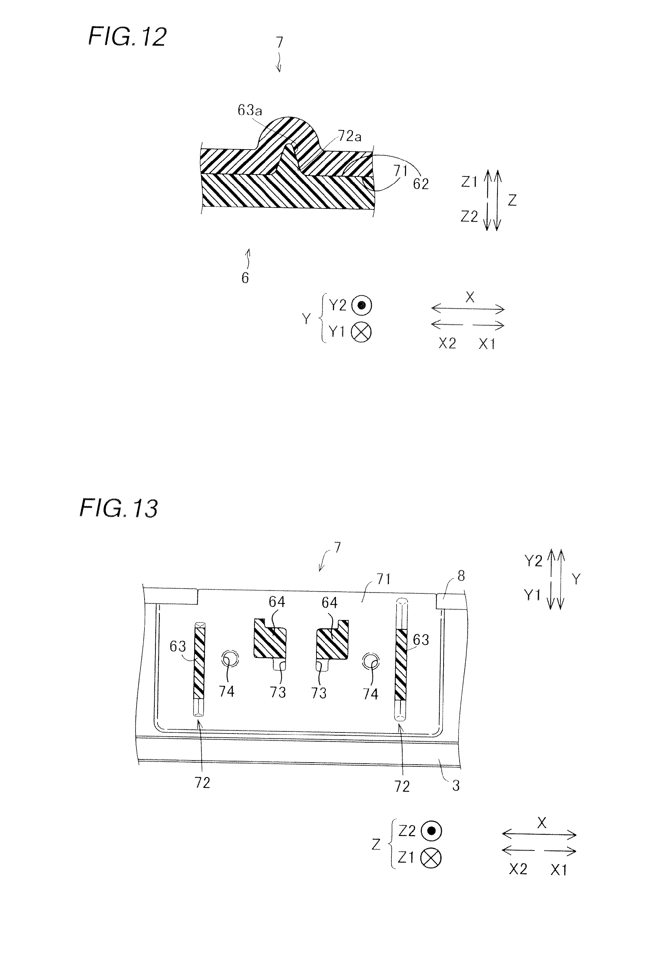

The groove portions 72 each are formed to extend to the vicinities of both end portions of the mounting surface 71 in the anteroposterior direction (direction Y), as shown in Fig. 8. The groove portions 72 are configured to be relatively slidable while engaging with the ribs 63, as shown in Figs. 13 and 14. The groove portions 72 are so configured that one ends on the rear side (arrow Y2 direction side) in the longitudinal direction (direction Y) thereof are spaced from one ends on the rear side in the longitudinal direction of the ribs 63 before the hooks 64 are slid relatively with respect to the holes 73, as shown in Fig. 13. Furthermore, the groove portions 72 are so configured that other ends on the front side (arrow Y1 direction side) in the longitudinal direction (direction Y) thereof are spaced from other ends on the front side in the longitudinal direction of the ribs 63 after the hooks 64 are slid relatively with respect to the holes 73, as shown in Fig. 14.

The two holes 73 are provided at a prescribed interval in the mounting surface 71 of the stand mounting member 7, as shown in Fig. 8. The two holes 73 are provided in a substantially central portion in the longitudinal direction (direction X) of the mounting surface 71 of the stand mounting member 7. The holes 73 have shapes corresponding to the shapes of the hooks 64 so as to engage with the hooks 64 of the stand member 6. The holes 73 are configured to engage with the hooks 64 to temporarily fix the stand member 6 to the display body 2, as shown in Figs. 13 and 14. The holes 73 and the hooks 64 are configured to engage with each other while relatively sliding along arrow Y1 to temporarily fix the stand member 6.

The two screw holes 74 are provided at a prescribed interval in the mounting surface 71 of the stand mounting member 7, as shown in Fig. 8. The two screw holes 74 are provided on the outsides in the horizontal direction (direction X) of the two holes 73, respectively. The screw holes 74 are provided on the insides in the horizontal direction (direction X) of the two groove portions 72, respectively. When the display body 2 and the stand member 6 are fixed to each other with the screws 66, the side surface portions 63a of the ribs 63 are gradually guided along the inner side surfaces 72a of the groove portions 72 so that the ribs 63 and the groove portions 72 engage with each other.

The cover member 8 is arranged on the rear side (arrow Y2 direction side) of the display portion 4 and fixed to the rear frame 41 of the display portion 4 and the front cabinet 3, as shown in Figs. 2 and 3. The cover member 8 is so formed that the upper sides (arrow Z1 direction sides), the horizontal sides (X-direction sides), and the rear sides (arrow Y2 direction sides) of the circuit boards 5a and 5b mounted to the display portion 4 are not exposed, as shown in Fig. 3. The screws 82 are inserted into the screw holes 41a to 41c of the rear frame 41 and the screw holes 31 of the front cabinet 3 through screw receiving holes 81, whereby the cover member 8 is mounted to the rear frame 41 and the front cabinet 3.

Next, a procedure for mounting the stand member 6 is described with reference to Figs. 9 to 15. First, the stand member 6 is mounted from the lower side (arrow Z2 direction side) of the display body 2, as shown in Figs. 9 and 10. At this time, the two hooks 64 of the stand member 6 are inserted into the two holes 73 of the stand mounting member 7, respectively, as shown in Figs. 11 and 13. The two ribs 63 of the stand member 6 engage with the two groove portions 72 of the stand mounting member 7, respectively. In this state, the hooks 64 of the stand member 6 engage with the holes 73 of the display body 2 while sliding relatively with respect to the holes 73 of the display body 2, whereby the stand member 6 is temporarily fixed to the display body 2, as shown in Fig. 14. At this time, the ribs 63 relatively slide while engaging with the groove portions 72 (see Fig. 11). The ribs 63 and the hooks 64 of the stand member 6 slide relatively with respect to the groove portions 72 and the holes 73 of the display body 2, respectively, as shown in Figs. 13 and 14. In this state, the stand member 6 is fixed to the display body 2 with the screws 66, as shown in Figs. 12 and 15. At this time, the side surface portions 63a of the ribs 63 are guided along the inner side surfaces 72a of the groove portions 72 so as to come into contact with the inner side surfaces 72a of the groove portions 72, as shown in Fig. 11, and the tip portions of the ribs 63 move toward the tip portions of the groove portions 72, as shown in Fig. 12. Thus, the ribs 63 and the groove portions 72 are positioned, the side surface portions 63a of the ribs 63 and the inner side surfaces 72a of the groove portions 72 come into close contact with each other and engage with each other, and the mounting surface 62 and the mounting surface 71 come into surface contact with each other. Therefore, the ribs 63 and the groove portions 72 are accurately aligned.

According to this embodiment, as hereinabove described, the ribs 63 tapered in the vertical direction with respect to the contact surface where the stand member 6 and the display body 2 come into contact with each other are provided on the stand member 6, the groove portions 72 formed in tapered shapes corresponding to the shapes of the ribs 63 and engaging with the ribs 63 are provided on the display body 2, and the side surface portions 63a of the ribs 63 are gradually guided along the inner side surfaces 72a of the groove portions 72 so that the ribs 63 and the groove portions 72 engage with each other when the display body 2 and the stand member 6 are fixed to each other with the screws 66. Thus, the tips of the tapered ribs 63 move toward the tips of the tapered groove portions 72 along the inner side surfaces 72a of the tapered groove portions 72 when the stand member 6 is mounted to the display body 2, and hence the ribs 63 and the groove portions 72 can be accurately positioned. Thus, the stand member 6 and the display body 2 can be accurately positioned, and hence the stand member 6 can be inhibited from being mounted to the display body 2 in a state inclined in a rotation direction with respect to the display body 2 in plan view when the television set 1 mounted with the stand member 6 is set on a setting surface. As a result, the user may not finely adjust the stand member 6 not to incline the stand member 6 when mounting the stand member 6, and hence workability for mounting the stand member 6 can be improved. Furthermore, the tips of the tapered ribs 63 move toward the tips of the tapered groove portions 72 while being guided by the inner side surfaces 72a of the tapered groove portions 72 when the stand member 6 is mounted to the display body 2, and hence the stand member 6 and the display body 2 can be easily accurately positioned to be mounted to each other. As a result, also according to this, workability for mounting the stand member 6 can be improved.

According to this embodiment, as hereinabove described, the ribs 63 are integrally provided on the stand member 6 and formed to extend in the direction along the contact surface, and the groove portions 72 are integrally provided on the display body 2 and are formed in the shapes corresponding to the shapes of the ribs 63, whereby the ribs 63 and the groove portions 72 may not be provided separately from the stand member 6 and the stand mounting member 7 because of the ribs 63 and the groove portions 72 provided integrally on the stand member 6 and the display body 2, respectively. Thus, increase in the number of components can be prevented. Furthermore, the ribs 63 extending in the direction along the contact surface are provided, and the groove portions 72 corresponding to the ribs 63 are provided, whereby the ribs 63 and the groove portions 72 can engage with each other in a larger region extending in the direction along the contact surface. Thus, the stand member 6 becomes harder to incline with respect to the display body 2 in a state where the ribs 63 and the groove portions 72 engage with each other, and consequently the stand member 6 can be further inhibited from being mounted to the display body 2 in the state inclined with respect to the display body 2.

According to this embodiment, as hereinabove described, the two ribs 63 are arranged at the interval, and the two groove portions 72 engage with the two ribs 63, whereby two sets of the ribs 63 and the groove portions 72 can suppress the inclination of the stand member 6. Thus, the stand member 6 can be effectively inhibited from being mounted to the display body 2 in the state inclined with respect to the display body 2.

According to this embodiment, as hereinabove described, the two ribs 63 are provided on the outsides of the positions where the screws 66 are attached so as to hold the screws 66 therebetween, and the two groove portions 72 engaging with the two ribs 63 are provided on the outsides of the positions where the screws 66 are attached so as to hold the screws 66 therebetween, whereby a distance between the two ribs 63 can be increased, and hence the inclination (angle) of the stand member 6 with respect to the display body 2 can be reduced even if the stand member 6 deviates by the same length in the rotation direction with respect to the display body 2 in plan view, as compared with a case where the distance between the two ribs 63 is small. Thus, the stand member 6 can be more effectively inhibited from being mounted to the display body 2 in the state inclined with respect to the display body 2.

According to this embodiment, as hereinabove described, the ribs 63 each are formed in the substantially triangular cross-sectional shape, and the groove portions 72 each are formed in a shape corresponding to the substantially triangular cross-sectional shape of each of the ribs 63, whereby the tips of the ribs 63 each formed in the substantially triangular cross-sectional shape are easily positioned along the inner side surfaces 72a of the groove portions 72 each formed in the substantially triangular cross-sectional shape, and hence the stand member 6 can be easily positioned with respect to the display body 2.

According to this embodiment, as hereinabove described, the tip portions of the ribs 63 each are formed in a rounded shape. Thus, the possibility that the tip portions of the ribs 63 may be broken can be reduced as compared with the case where the tip portions are pointed, and hence the ribs 63 and the groove portions 72 can be inhibited from becoming incapable of being accurately positioned due to the breakage of the tip portions of the ribs 63.

According to this embodiment, as hereinabove described, the holes 73 are provided in the display body 2, the hooks 64 engaging with the holes 73 to temporarily fix the stand member 6 to the display body 2 are provided on the stand member 6, and the ribs 63 are configured to engage with the groove portions 72 when the stand member 6 is temporarily fixed to the display body 2 by engaging the holes 73 and the hooks 64 with each other, whereby the ribs 63 and the groove portions 72 can be easily relatively positioned when the stand member 6 is temporarily fixed to the display body 2 with the holes 73 and the hooks 64. Thus, the ribs 63 and the groove portions 72 can easily engage with each other. Furthermore, the ribs 63 and the groove portions 72 inhibit the stand member 6 from being inclined with respect to the display body 2 also when the holes 73 and the hooks 64 to temporarily fix the stand member 6 to the display body 2 are provided, and hence the holes 73 and the hooks 64 can be inhibited from being broken by twisting due to the inclination of the stand member 6 with respect to the display body 2.

According to this embodiment, as hereinabove described, the ribs 63 are formed to extend linearly, the groove portions 72 are formed linearly to correspond to the linearly extending ribs 63, and the ribs 63 are configured to be relatively slidable in a state of engaging with the groove portions 72 when the stand member 6 is temporarily fixed to the display body 2 by engaging the holes 73 and the hooks 64 with each other while relatively sliding the holes 73 and the hooks 64, whereby the holes 73 and the hooks 64 can be relatively moved while being guided by the ribs 63 and the groove portions 72. Thus, the holes 73 and the hooks 64 can easily engage with each other to temporarily fix the stand member 6 to the display body 2.

According to this embodiment, as hereinabove described, the ribs 63 and the groove portions 72 are configured to have prescribed intervals in a sliding direction therebetween in states before and after the ribs 63 relatively slide in the state of engaging with the groove portions 72. Thus, the prescribed intervals between the ribs 63 and the groove portions 72 can absorb variation of the dimensions of the ribs 63 even if the dimensions of the ribs 63 vary from each other.

According to this embodiment, as hereinabove described, the two ribs 63 extending in the direction along the contact surface and arranged at the prescribed interval are provided, the groove portions 72 formed to extend in the direction along the contact surface so as to correspond to the ribs 63 and engaging with the two ribs 63 are provided, and the two groove portions 72 are formed to have the lengths different from each other. Thus, the orientation of the display body 2 can be easily distinguished, employing the groove portions 72 having the lengths different from each other as indicators, and hence the user can handily perform an operation of fixing the stand member 6 to the display body 2.

According to this embodiment, as hereinabove described, the planarized mounting surface 62 is provided on the stand member 6, the planarized mounting surface 71 is provided on the display body 2, the ribs 63 are provided on the mounting surface 62 of the stand member 6, and the groove portions 72 are provided on the mounting surface 71 of the display body 2, and the stand member 7 and the display body 2 are so fixed to each other with the screws 66 that the side surface portions 63a of the ribs 63 and the inner side surfaces 72a of the groove portions 72 come into close contact with each other and the mounting surface 62 and the mounting surface 71 come into surface contact with each other, whereby the mounting surface 62 and the mounting surface 71 come into surface contact with each other so that the stand member 6 can stably support the display body 2 while the ribs 63 and the groove portions 72 suppress the inclination of the stand member 6.

The embodiment disclosed this time must be considered as illustrative in all points and not restrictive. The range of the present invention is shown not by the above description of the embodiment but by the scope of claims for patent, and all modifications within the meaning and range equivalent to the scope of claims for patent are included.

For example, while the television set is applied as the example of the display according to the present invention in the aforementioned embodiment, the present invention is not restricted to this. The present invention may alternatively be applied to a display other than the television set. For example, the present invention may be applied to a display of a PC (personal computer) or the like.

While the upper surfaces of the ribs serving as the projecting portion according to the present invention and the bottom surfaces of the groove portions serving as the recess portion according to the present invention are formed parallel to the contact surfaces in the aforementioned embodiment, the present invention is not restricted to this. According to the present invention, the upper surface of the projecting portion and the bottom surface of the recess portion may not be parallel to the contact surfaces but slightly inclined, so far as the same are formed in the direction along the contact surfaces.

While the ribs serving as the projecting portion according to the present invention are provided on the stand member and the groove portions serving as the recess portion according to the present invention are provided on the display body in the aforementioned embodiment, the present invention is not restricted to this. According to the present invention, the projecting portion may alternatively be provided on the display body, and the recess portion may alternatively be provided on the stand member.

While the ribs serving as the projecting portion according to the present invention and the groove portions serving as the recess portion according to the present invention are linearly formed in the aforementioned embodiment, the present invention is not restricted to this. According to the present invention, the projecting portion and the recess portion may alternatively be in the form of a curve, for example.

While the screws are shown as the example of the fastening member according to the present invention in the aforementioned embodiment, the present invention is not restricted to this. According to the present invention, a fastening member other than the screws may alternatively be employed.

While the two ribs serving as the projecting portion according to the present invention and the two groove portions serving as the recess portion according to the present invention are formed in the aforementioned embodiment, the present invention is not restricted to this. According to the present invention, one or more than two projecting portions and one or more than two recess portions may alternatively be provided.

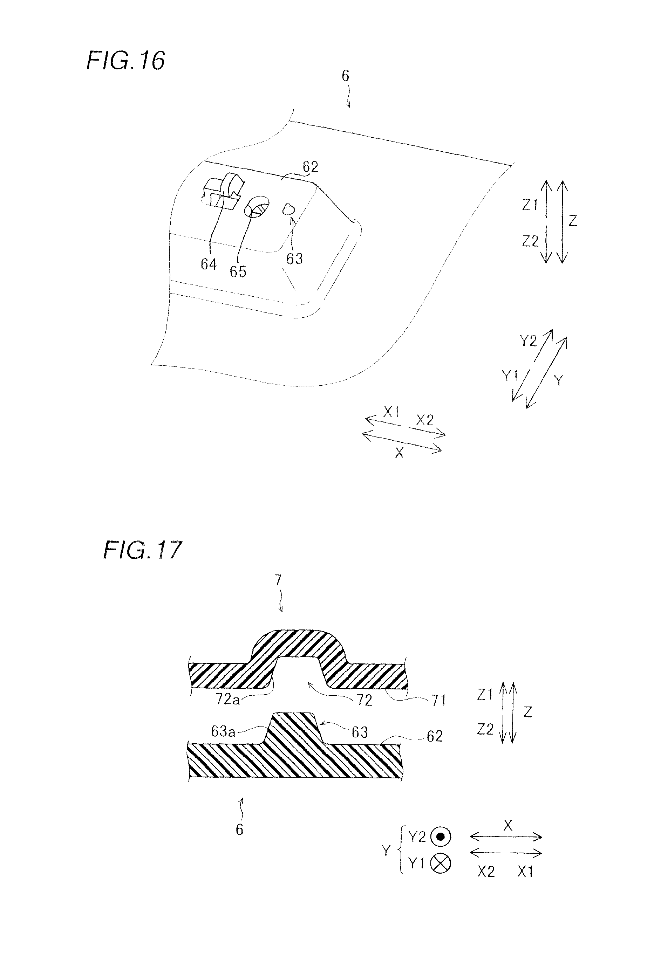

While the ribs serving as the projecting portion according to the present invention are formed to extend linearly in the aforementioned embodiment, the present invention is not restricted to this. According to the present invention, the projecting portion may alternatively be formed in a substantially conical shape, as in a first modification shown in Fig. 16, for example, dissimilarly to the ribs formed to extend linearly. The section (longitudinal section) of the projecting portion formed in the substantially conical shape is substantially triangular.

While the ribs serving as the projecting portion according to the present invention and the groove portions serving as the recess portion according to the present invention each are formed in the substantially triangular cross-sectional shape in the aforementioned embodiment, the present invention is not restricted to this. According to the present invention, the projecting portion and the recess portion may alternatively be formed to have substantially trapezoidal sections (longitudinal sections), for example, other than the triangular sections, as in a second modification shown in Fig. 17, so far as the same each are formed in a tapered shape.

While the ribs serving as the projecting portion according to the present invention and the groove portions serving as the recess portion according to the present invention each are formed in the substantially triangular cross-sectional shape in the aforementioned embodiment, the present invention is not restricted to this. According to the present invention, the projecting portion and the recess portion may alternatively be formed to have substantially semicircular or polygonal sections, for example, other than the triangular sections, so far as the same each are formed in a tapered shape.

White the hooks serving as the first temporary fixing portion according to the present invention are provided on the stand member and the holes serving as the second temporary fixing portion according to the present invention are provided in the display body in the aforementioned embodiment, the present invention is not restricted to this. According to the present invention, holes serving as the first temporary fixing portion according to the present invention may alternatively be provided in the stand member, and hooks serving as the second temporary fixing portion according to the present invention may alternatively be provided on the display body.

While the hooks serving as the first temporary fixing portion according to the present invention and the holes serving as the second temporary fixing portion according to the present invention are provided in the aforementioned embodiment, the present invention is not restricted to this. According to the present invention, no first temporary fixing portion or second temporary fixing portion may alternatively be provided.

While the groove portions serving as the recess portion according to the present invention are provided on the stand mounting member in the aforementioned embodiment, the present invention is not restricted to this. According to the present invention, the recess portion may alternatively be provided on the front cabinet, for example, other than the stand mounting member of the display body.

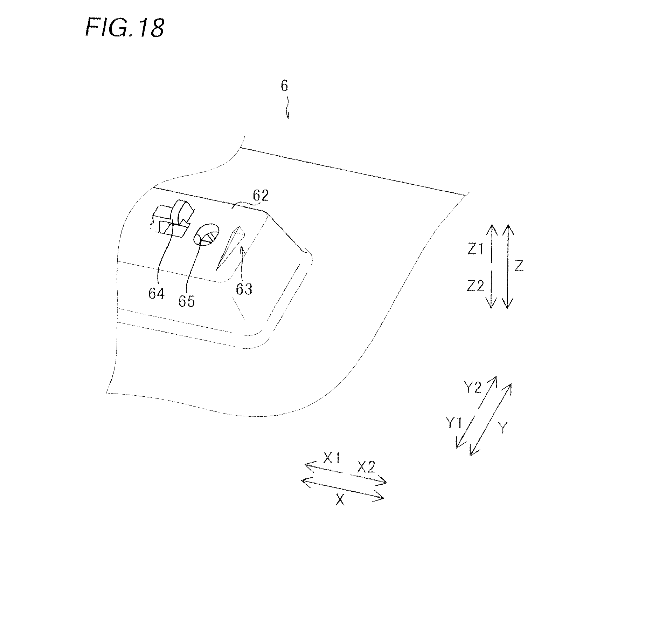

While the heights in the direction Z of the ribs serving as the projecting portion according to the present invention are constant and the widths in the direction X of the ribs are constant in the aforementioned embodiment, the present invention is not restricted to this. According to the present invention, the projecting portion may alternatively be so formed that the height thereof is tapered along the sliding direction while the width thereof is tapered along the sliding direction, as in a third modification shown in Fig. 18.

While the groove portion (recess portion) on the arrow X1 direction side is formed to be longer than the groove portion (recess portion) on the arrow X2 direction side in the aforementioned embodiment, the present invention is not restricted to this. According to the present invention, the groove portion (recess portion) on the arrow X2 direction side may alternatively be formed to be longer than the groove portion (recess portion) on the arrow X1 direction side. Further alternatively, the groove portion (recess portion) on the arrow X1 direction side and the groove portion (recess portion) on the arrow X2 direction side may be formed to have identical lengths.

## Claims

1. A display (1) comprising:
a display body (2) including a display portion (4);
a stand member (6) supporting said display body; and
a fastening member (66) fixing said display body and said stand member to each other, wherein
either said stand member or said display body has a projecting portion (63) tapered in a vertical direction with respect to a contact surface where said stand member and said display body come into contact with each other,
either said display body or said stand member has a recess portion (72) formed in a tapered shape corresponding to a shape of said projecting portion and engaging with said projecting portion, and
a side surface portion of said projecting portion is gradually guided along an inner side surface of said recess portion so that said projecting portion and said recess portion engage with each other when said display body and said stand member are fixed to each other with said fastening member.

2. The display according to claim 1, wherein
said projecting portion includes a rib (63) integrally provided on either said stand member or said display body and extending in a direction along said contact surface, and
said recess portion includes a groove portion (72) in a shape corresponding to a shape of said rib, integrally provided on either said display body or said stand member.

3. The display according to claim 1, wherein
said projecting portion includes a first projecting portion (63) and a second projecting portion (63) arranged at an interval, and
said recess portion includes a first recess portion (72) engaging with said first projecting portion and a second recess portion (72) engaging with said second projecting portion.

4. The display according to claim 3, wherein
said first projecting portion and said second projecting portion are provided outside a position where said fastening member is attached so as to hold said fastening member therebetween, and
said first recess portion engaging with said first projecting portion and said second recess portion engaging with said second projecting portion are provided outside a position where said fastening member is attached so as to hold said fastening member therebetween.

5. The display according to claim 1, wherein
said projecting portion has a triangular cross-sectional shape, and
said recess portion has a shape corresponding to said triangular cross-sectional shape of said projecting portion.

6. The display according to claim 1, wherein
said projecting portion has a conical shape, and
said recess portion has a cross-sectional shape corresponding to a cross-sectional shape of said projecting portion having said conical shape.

7. The display according to claim 1, wherein
said projecting portion has a trapezoidal cross-sectional shape, and
said recess portion has a cross-sectional shape corresponding to said trapezoidal cross-sectional shape of said projecting portion.

8. The display according to claim 1, wherein
a tapered tip portion of said projecting portion is rounded.

9. The display according to claim 1, wherein
said display body includes a first temporary fixing portion (73),
said stand member includes a second temporary fixing portion (64) engaging with said first temporary fixing portion of said display body to temporarily fix said stand member to said display body, and
said projecting portion is configured to engage with said recess portion when said stand member is temporarily fixed to said display body by engaging said first temporary fixing portion and said second temporary fixing portion with each other.

10. The display according to claim 9, wherein
either said first temporary fixing portion or said second temporary fixing portion is formed in a hook shape, and
either said second temporary fixing portion or said first temporary fixing portion is formed in a hole shape corresponding to said hook shape.

11. The display according to claim 9, wherein
said projecting portion has a linearly extending shape,
said recess portion is so linearly formed as to correspond to said projecting portion extending linearly, and
said projecting portion is configured to be relatively slidable in a state of engaging with said recess portion when said stand member is temporarily fixed to said display body by engaging said first temporary fixing portion and said second temporary fixing portion with each other while relatively sliding said first temporary fixing portion and said second temporary fixing portion.

12. The display according to claim 10, wherein
said projecting portion is so formed that a height thereof is tapered along a sliding direction and a width thereof is tapered along said sliding direction.

13. The display according to claim 11, wherein
said projecting portion and said recess portion have prescribed intervals therebetween in a sliding direction in states before and after said projecting portion relatively slides while engaging with said recess portion.

14. The display according to claim 9, wherein
said projecting portion includes a first projecting portion and a second projecting portion each extending in a direction along said contact surface and arranged at a prescribed interval,
said recess portion includes a first recess portion formed to extend in said direction along said contact surface so as to correspond to said projecting portion and engaging with said first projecting portion and a second recess portion formed to extend in said direction along said contact surface so as to correspond to said projecting portion and engaging with said second projecting portion, and
said first recess portion and said second recess portion are formed to have lengths different from each other.

15. The display according to claim 1, wherein
said stand member has a planarized first mounting surface (62),
said display body has a planarized second mounting surface (71),
said projecting portion is provided on either said first mounting surface of said stand member or said second mounting surface of said display body,
said recess portion is provided on either said second mounting surface of said display body or said first mounting surface of said stand member, and
said stand member and said display body are so fixed to each other with said fastening member that said side surface portion of said projecting portion and said inner side surface of said recess portion come into close contact with each other and said first mounting surface and said second mounting surface come into surface contact with each other.
